(19) **Europäisches Patentamt**
**European Patent Office**
**Office européen des brevets**

(11) **EP 2 087 409 B1**

(12) **EUROPEAN PATENT SPECIFICATION**

(45) Date of publication and mention
of the grant of the patent:
**21.03.2012 Bulletin 2012/12**

(51) Int Cl.:
***G05D 23/12*** *(2006.01)*

(21) Application number: **07864948.0**

(22) Date of filing: **30.11.2007**

(86) International application number:
**PCT/US2007/085999**

(87) International publication number:
**WO 2008/070533 (12.06.2008 Gazette 2008/24)**

(54) **A VARIABLE THERMAL RESISTOR SYSTEM**

VARIABLES THERMOWIDERSTANDSSYSTEM

SYSTÈME DE RÉSISTANCES THERMIQUES VARIABLES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **01.12.2006 US 872220 P**
**09.10.2007 US 869228**

(43) Date of publication of application:
**12.08.2009 Bulletin 2009/33**

(73) Proprietor: **Honeywell International Inc.**
**Morristown, NJ 07962 (US)**

(72) Inventors:
• **EICKHOFF, Steven J.**
**Morristown, NJ 07962-2245 (US)**

• **ZHANGE, Chunbo**
**Plymouth, Minnesota 55442 (US)**

(74) Representative: **Buckley, Guy Julian**
**Patent Outsourcing Limited**
**1 King Street**
**Bakewell**
**Derbyshire DE45 1DZ (GB)**

(56) References cited:
**EP-A- 0 790 641          WO-A-2007/122147**
**WO-A1-90/05982          US-A- 5 527 392**
**US-A1- 2001 008 172**

**Description**

Background

The present invention pertains to temperature control of devices and particularly to an apparatus for such temperature control.
WO 90/05982 discloses a method and apparatus for thermal isolation and stability of disk drives.

Summary

The invention is a vapor phase variable thermal resistor for efficient thermal control of a device in a changeable ambient temperature environment.

Brief Description of the Drawing

Figures 1 and 2 are not present.
Figure 3 is a graph of thermal conductivity versus gas pressure;
Figure 4 is a graph of vapor pressure versus temperature;
Figure 5 is graph of thermal conductivity versus pressure in a log scale for various vapor gaps;
Figure 6 contains a table showing gyroscope and variable thermal resistor system parameters;
Figure 7 is a graph showing heat dissipation versus temperature for a variable thermal resistor relative to a package or device;
Figure 8 contains a table showing parameters of a VCSEL and a variable thermal resistor;
Figure 9 is a graph of heat loss from a VCSEL versus ambient temperature with the variable thermal resistor system;
Figure 10 is a graph showing heat dissipation for a previous VCSEL thermal isolation structure and a VCSEL with a vapor phase variable thermal resistor, and the advantage of the latter, versus temperature;
Figure 11 is a graph of rate output versus temperature for a MEMS gyroscope for evaluating a benefit of the variable thermal resistor used in conjunction with the gyroscope;
Figure 12 is a graph of compensated bias rate residual versus temperature for the gyroscope;
Figure 13 is a graph of rate sigma versus tau (time) for the gyroscope; and
Figure 14 is a graph of rate output versus time for the gyroscope.

The present invention in its various aspects is as set out in the appended claims.

Description

Many systems include components or subsystems that require operation at fixed and elevated temperatures. Temperature regulation is usually achieved by use of a variable power heater that uses more heat when the external environment is cool and uses less heat when the external environment is warm. Often, the power used in this temperature regulation system is a dominant part of the power budget for the entire system. It is desirable to reduce the power required to maintain constant temperature.
The present invention may incorporate a variable thermal resistor that reduces the power required to maintain a device at constant temperature by varying the thermal resistance of the package as a function of temperature. The term "resistor" herein may generally refer to a thermal resistor rather than an electrical resistor.
The present system may be passively adapted to the ambient temperature, without a need of complex mechanical structure. It may be easy to scale from a small to a large device and vice versa without an increase of design and structure complexity. The system may easily adapt to devices of various shapes and surfaces, including irregular ones, and be quite inert to structural failure because of no moving components. The system may enable a temperature-stabilizing capability to an operating temperature range which may have appeared previously not feasible due to power constraints.
Some of the advantages of the system with a VTR compared with a similar system without a VTR may be noted herein. In the present system, there may be significantly lower thermal management power consumption (greater than ten times) than a system without VTR. The present system may significantly extend the operating temperature range (e.g., to a low temperature so as to meet military specs) which appeared previously impossible with other like systems. Thus, this system may make feasible (military) applications of high precision devices at very low temperatures with long-term deployment.

The system may provide a passive approach without a mechanically moving component, and therefore would not necessarily be prone to structural failure and mechanical drift. The system may be non-complex and structurally simple. The system may involve "non-contact", and be non-intrusive with minimum interference to the subject device function and structure.

Some factors of the present system may include several of the following items. There should be a vapor material selection. It appears desirable to have the vapor material work in the free-molecule and/or transition heat transfer regimes in the desired operating temperatures. The material should be compatible with the process and structure. Although there may be vapor materials available in the temperature range of interest, one might do a parametric study and experimental validation before selection of the material.

In the passive approach of the present system, the thermal performance may be adjusted once built. Thus, one may design and build the device to a set specification without large variation. This may require accurate modeling and some validation during design to eliminate uncertainty.

This approach may require an integration of the functional device, vapor cell, and thermal isolation structure through hermetic packaging. Although hermetic bonding/sealing methods appear well developed, the process compatibility and feasibility may still be examined carefully for accurate design and process control.

Interference from impurities may be a concern. An impurity gas could come from other materials inside the structure, from ambient gas diffusion and/or process-induced gas. It seems virtually impracticable to wholly eliminate all impurities. Thus, it may be important to understand the influence and tolerance of impurity gases and to control them to an acceptable level. Out-gassing from the structure may be controlled by material selection and a getter. The ambient gas intrusion may be controlled by a cautious bonding/sealing design. The process-induced gas may be controlled by a vacuum process.

The resistor system may consist of a hermetically sealed solid shell surrounding the device which is to remain at constant temperature (the device being, for example, a VCSEL or a MEMS gyroscope). In an instance of an arrangement of the shell or package and device or component, the exterior of the shell may be exposed to an ambient environment and have a heat exchanger on its outer or external surface. An interior surface of the shell or package may be coated with a low vapor pressure solid substance (i.e., vapor generating) (high molecular weight hydrocarbon, naphthalene, anthracine) or a low vapor pressure liquid substance (i.e., vapor generating) in a porous structure or matrix of surface. Alternatively or additionally, an exterior surface of the device or component is coated with a low vapor pressure solid substance (i.e., vapor generating) (high molecular weight hydrocarbon, naphthalene, anthracine, camphor) or a low vapor pressure liquid substance (i.e., vapor generating) in a porous structure or matrix of surface.

The space between the shell and the device is evacuated such that the only gas in the space is the vapor of the low vapor pressure solid or liquid. A gap between the shell and the device may be a design parameter of space that can be changed to adjust the heat transfer between the shell and the device. The gap may be usually from just above zero to a few millimeters (mm). A structure of low thermal conductance bars or legs may support the device relative to the shell in order to minimize solid conduction losses between device and shell. The conductance of the legs may be varied to dissipate the steady state heat generated in the device. The surface of the device and low vapor pressure material may be of low emissivity materials to minimize radiation heat losses.

The VCSEL, MEMS gyroscope, or other device may be constant temperature controlled. The device may be encased in a housing having a shape and dimensions similar in proportion to those of the internal surface of the enclosure or shell so as to result in a gap having a constant and/or certain dimension between the surfaces of the shell and device. The device with the housing may still be referred as to the device.

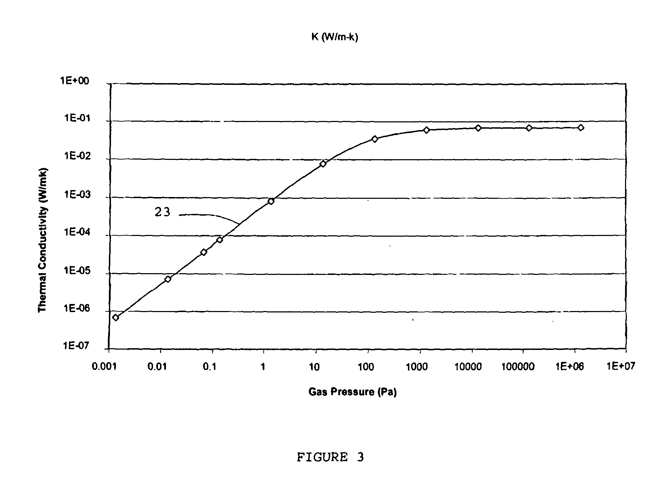

The thermal conductivity of a gas is generally a linear function of pressure from about zero torr to about one torr. In Figure 3, thermal conductivity (W/mk) versus gas pressure (Pa) is graphed with a curve 23 for naphthalene. In the graph, vapor conductivity appears as a linear function of pressure from a vacuum (Kn>>10) to a transition pressure (0.01<Kn<10) above which it becomes independent of pressure. Many solid materials (for example, high molecular weight hydrocarbons) have vapor pressures in the -50°C to 70°C range that fall into a linear region.

At low temperatures, the vapor pressure of the "low vapor pressure material" may be very small, so the thermal conductance of the gap and therefore the heat losses would be very low. At high temperature, the vapor pressure of the "low vapor pressure material" may be higher, so the thermal conductance of the gap and therefore the heat losses would be higher. Thus, the present system may thus be a type of variable thermal resistor that reduces the power required to maintain the VCSEL or other device at a constant temperature under low ambient temperature conditions.

The vapor phase variable thermal resistor (VTR) system may provide a low power approach to significantly improve the performance of the device through temperature stabilization. The VTR may include a hermetically sealed vapor cell or shell and thermal isolation structure surrounding the device or component, whose thermal resistance changes by more than ten times over a temperature range of about -40°C to 85°C (e.g., a product specification). This passive approach may have no moving parts and take advantage of the non-linear change in vapor pressure with temperature of a vapor generating coating, to modulate the thermal resistance of the gap separating the temperature stabilized component and the VTR package.

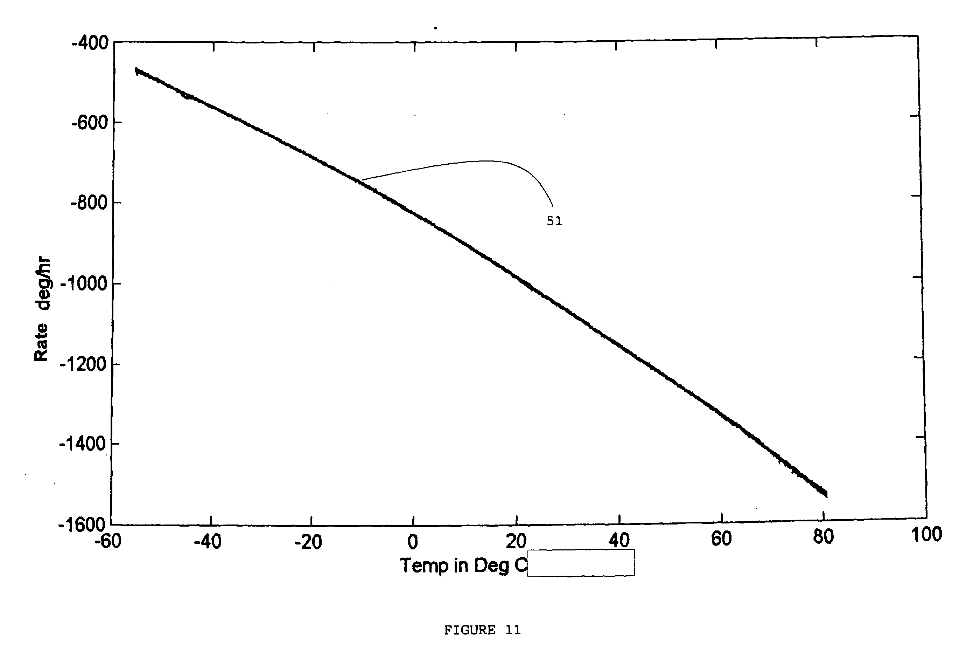

Several applications of the present resistor system and benefits of temperature stabilization with the vapor phase VTR may be noted. One application may include a micro electro mechanical systems (MEMS) gyroscope as a device in which stability improved five times with temperature stabilization (Figures 11-14). Another application may include a chip scale atomic clock using a VCSEL in which the power required to temperature-stabilize the VCSEL as the device is reduced by about ten times. The use of the vapor phase VTR system in these diverse applications may illustrate the flexibility of the system to accommodate a wide range of size, geometry, power dissipation, and temperature range requirements. If realized, the vapor phase VTR may significantly reduce the power required by previous thermal management strategies, and enable new levels of performance in applications where temperature stabilization was previously impracticable or virtually impossible due to power constraints.

Many systems may often include components that require operation at a fixed temperature, for example, the vertical cavity semiconductor laser (VCSEL) and physical package of a chip scale atomic clock (CSAC). This may usually be achieved by heating the respective component with a variable power heater which uses more power at low ambient temperatures and less power at high ambient temperatures. In many cases, the power used to regulate component temperature may be a significant portion of the total power budget of the system. Thus, it is desirable to move away from active heating to a thermal management strategy based on a variable thermal resistance and a passive power consumption of the component. At low ambient temperatures the thermal resistance may be high, allowing the component to remain warm without significant heating; while at high ambient temperatures the thermal resistance may be low, allowing the component to dissipate enough heat to maintain the correct temperature. This approach of system may complement maintenance of the temperature of the component.

The hermetic package with an externally integrated heat sink may surround the temperature stabilized component. A vapor-generating coating (solid or liquid in porous structure) may cover the interior walls of the hermetic package. The temperature stabilized component may sit on a low conductance thermal isolation structure attached to package, having bars or legs. The pressure in the vapor gap may be modulated by an ambient temperature, which in turn can control the thermal conductance of the gap. Due to the non-linear nature of the change in vapor pressure versus temperature, the thermal conductance of the vapor gap may change by five orders of magnitude over a temperature range of -40°C to 85°C.

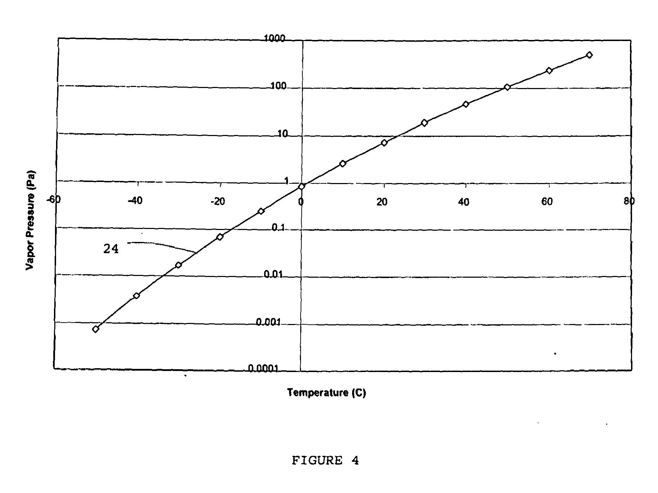

Figure 4 is a graph of vapor pressure (Pa) versus temperature (°C) for naphthalene, which may be a material on the walls. Vapor pressure appears in the graph as a nonlinear function of temperature according to curve 24 of shell. The vapor pressure may change by a factor of le4 to le6 from -50°C to 70°C.

The total thermal conductance between the temperature stabilized component and the hermetic package may change by ten times over the temperature range. Dimensions related to a VCSEL or device in an illustrative example, dimensions may be 330, 330 and 280 microns for depth, width, and height, respectively. The device can be hermetically sealed within the package which has internal dimensions which may be 430, 430 and 380 microns. The coating on the package inner surface or walls may be low pressure vapor material such as, for instance, a high molecular weight hydrocarbon, e.g., naphthalene. The present system may apply to large range of dimensions and various shapes for various kinds of components where temperature maintenance is desired.

A stabilized component may be maintained at a constant temperature by transferring to the walls of the hermetic package the heat generated inside the component plus the heater power used to sustain (and fine tune) the temperature when needed. Heat dissipation of system may be tunable from 1e1 to 1e5 watt/sq meter by changing the low vapor coating material, gap thickness and surface area. Heat may be transferred by (solid) conduction through the thermal isolation structure, (gas) conduction through vapor gap, and (either medium) radiation. Heat transfer by free convection in enclosed gaps may be negligible if the product of the dimensionless Grashof and Prandtl numbers is less that one thousand, (Holman, 1990) which is generally the case here. An operating ambient temperature range of the temperature stabilized component may be limited at low ambient temperature by a maximum amount of allowed heater power, and at high ambient temperature by a maximum permissible temperature of the stabilized component.

The total heat transfer may be represented by the following equation.

$$Q_{Tot} = Q_{Solid} + Q_{Gas} + Q_{Rad} \qquad (1)$$

An approximate relationship for the gas thermal conductivity may be represented by the following,

$$K_R = \frac{K_0}{\left(1 + \dfrac{C}{PP}\right)}, \qquad (2)$$

where $K_R$ is the thermal conductivity at pressure P, $K_0$ is the thermal conductivity at one-atmosphere pressure, and PP is a pressure parameter,

$$PP = \frac{Pd}{T} \qquad\qquad (3)$$

Additional details of the terms in equations (1)-(3), are noted herein.

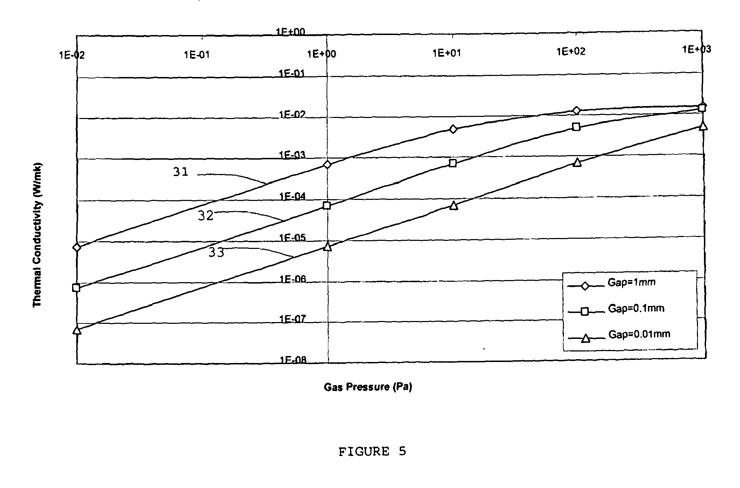

Figure 5 is graph of thermal conductivity versus pressure in log scales for vapor gaps of 1mm, 0.1mm, and 0.01mm, as shown by curves 31, 32 and 33, respectively, at a temperature of 10°C. The curves in Figure 5 may result from equation 2 when plotted as a function of gas pressure for various vapor gaps. As the thermal conductivity of the vapor gap increases from 0.01mm to 1mm, the thermal conductivity increases by two orders of magnitude for pressures below 100Pa. The gap distance may thus be one of the key parameters in controlling heat transfer through the vapor gap.

It also appears from Figure 5 that gas pressure has a significant effect on thermal conductivity and, by extension, on heat transfer. If the gas pressure in the gap can be appropriately modulated or controlled as a function of ambient temperature (i.e., low pressure at low ambient temperature and high pressure at high ambient temperature), the heat transferred through the gap may be controlled under certain power constraints.

Gap pressure modulation as a function of temperature may be accomplished passively by coating the interior walls of the package with an appropriate substance (solid, or liquid in porous media). When evacuated, the pressure in the gap may be due only to the vapor pressure of the coating material, which can be computed approximately from

$$\log_{10} p = -\frac{0.05223a}{T} + b \, , \qquad\qquad (4)$$

where "a" and "b" are empirical constants, and "T" is the package temperature. Since the package temperature is essentially equal to ambient temperature, the gap pressure (and thermal conductivity) may be modulated or determined by ambient temperature of environment.

A wide range of vapor pressures may be achieved at a given temperature by choosing the appropriate material; thus, it may be possible to accommodate a wide range of operating ambient temperatures, heat dissipation levels, and geometries.

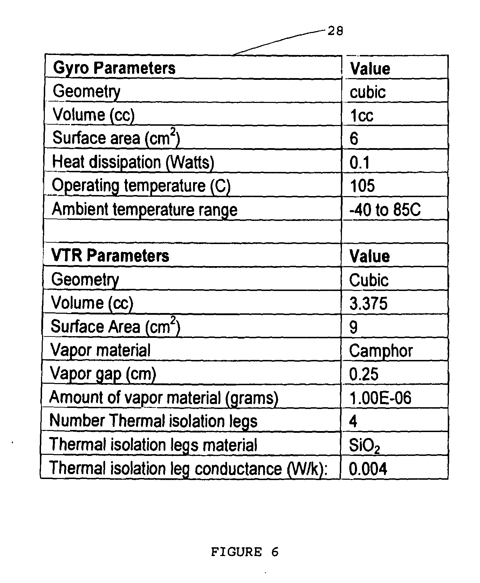

A MEMS gyroscope (gyro) is an example of a device in which significant performance improvements are possible with temperature stabilization. With temperature stabilization, the predicted bias stability of the MEMS gyro should improve from $3\ \frac{\deg}{hr}$ to $0.6\ \frac{\deg}{hr}$, or five times. An application of the vapor phase VTR system to this device may be shown. Figure 6 contains a table 28 showing gyro and VTR parameters.

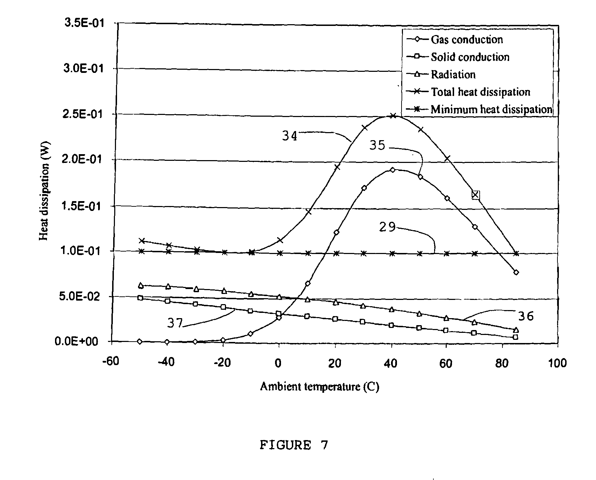

The gyro may consist of a MEMS component and supporting electronics, both of which have temperature sensitive parameters and may benefit from temperature stabilization. The required operating temperature range of the gyro may be said to be from -40°C to 85°C. The gyro may be approximated as a one cm$^3$ cube that dissipates 100mW of heat. With these gyro parameters along with VTR parameters, thermal performance of the package may be calculated and plotted. A graph on Figure 7 shows heat dissipation (i.e., heat loss) versus temperature for the VTR system relative to the package.

From the appearance of the plots in the Figure 7 graph, the minimum heat dissipation from the gyro is 0.1 watt (star-like line 29), the total heat dissipation for the VTR system is indicated by the top curve (x-like line 34), and the difference between the total heat dissipation (line 34) for the VTR system and the minimum heat dissipation (line 29) for the gyro is generally the heater power required to maintain constant temperature. Curves 35, 36 and 37 represent heat dissipation due to gas conduction, solid conduction and radiation, respectively.

Heater power may be zero when the ambient temperature is 85°C, and may have a maximum of 0.15 watt when the ambient temperature is 40°C. Thus, for a maximum power input of 0.15 watt, the bias stability of the gyro over the ambient -40°C to 85°C operating range may improve by five times.

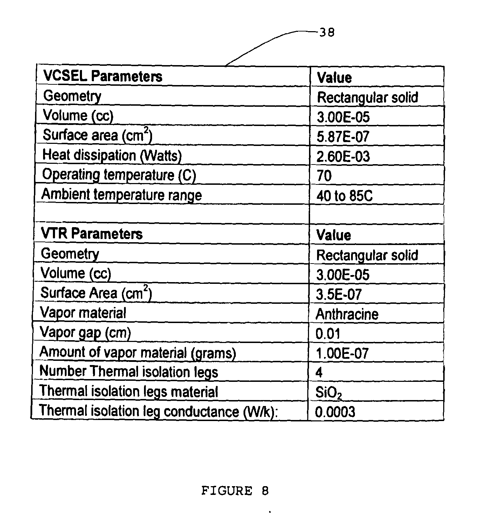

A VCSEL may be used in many applications which require very precise temperature control to maintain constant wavelength. It may be a component of the present system. A table 38 in Figure 8 shows parameters of a VCSEL and a VTR. In a CSAC, for example, the VCSEL wavelength should be controlled to 0.01nm which would require a temperature stability of 0.004° Kelvin. To maintain this temperature stability, the VCSEL may be heated to 70°C using a combination of the 2.6mW of power dissipated by the VCSEL and a heater. The heater may use little power when the ambient temperature is high, but it may use as much as 50mW when ambient temperature is low, which appears to be a significant portion of the total power budget of the CSAC. A prospective reduction in power consumption may be calculated by using a set of parameters descriptively similar to those used for the gyro.

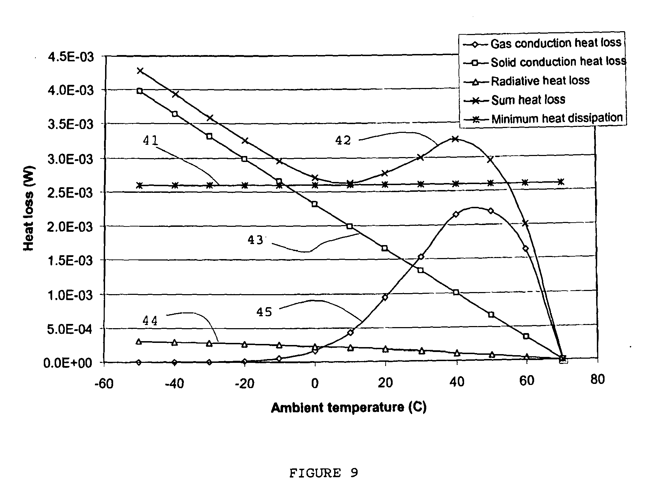

Figure 9 is a graph of heat loss from the VCSEL versus ambient temperature. The graph shows the solid, gas, radiation, and heat losses for the VCSEL VTR system. The minimum heat dissipation for the VCSEL is shown to be 2.6mW (star-like line 41), the total heat dissipation is shown by the upper "x" curve or line 42, and the heater power is the difference between the total heat dissipation and the minimum heat dissipation. The total heat loss or dissipation ("x" curve 42) may include solid conduction, radiation, and gas conduction through the vapor phase VTR system, as represented by curves 43, 44 and 45, respectively. Heater power appears to be about zero at 55°C (which is the maximum allowable ambient temperature in this design), and the maximum appears to be about 1.7mW at -50°C. The vapor phase VTR system should be able to operate between -50°C and 55°C.

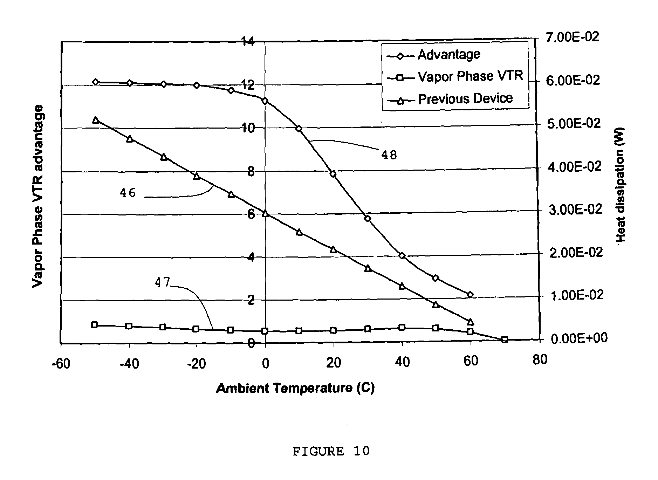

When compared to the heater power requirements of the previous VCSEL thermal isolation structure, the advantage of the VTR appears evident in Figure 10. At low ambient temperatures (-50° to 20°C), the VCSEL with VTR may use greater than ten times less power than the previous thermal isolation structure, and greater than two times less power from 20°C to 60°C. Figure 10 is a graph showing heat dissipation (W) for a previous VCSEL thermal isolation structure, a VCSEL with a vapor phase VTR, and the advantage (of the present system over the previous isolation structure) versus temperature (°C), as represented by curves 46, 47 and 48, respectively. The previous VCSEL isolation structure is shown to dissipate about 0.45 mW/°C.

Relative to equation (1) herein, the radiation heat transfer for two concentric surfaces may be approximated by the following relationship (Holman 1990),

$$Q_{rad} = \frac{4\sigma T^{*3}}{\dfrac{1}{\varepsilon_1} + \dfrac{1}{\varepsilon_2} - 1} , \qquad (5)$$

where $\sigma$ is the Stefan-Bolzmann constant, $\varepsilon_1$ and $\varepsilon_2$ are the emissivities of the surfaces enclosing the gas layer at temperature $T^*$.

The solid conduction $Q_{Solid}$ through the thermal isolation structure may be governed by Fourier's Law,

$$Q_{Solid} = -kA\nabla T , \qquad (6)$$

where k is the thermal conductivity of the material, A is the cross sectional area, and $\nabla T$ is the temperature gradient. Solid conduction heat transfer may thus be a linear function of the temperature difference between the stabilized component and the package.

Heat transfer $Q_{Gas}$ through the vapor gap may be separated into four distinct regimes which are distinguished from each other by the value of the Knudsen number,

$$Kn = \frac{\lambda}{d} , \qquad (7)$$

where $\lambda$ is the mean free path and d is a characteristic length, in this case, the vapor gap. In a continuum regime, **Kn** is less than 0.01, and heat *transfer* **$Q_c$** may be calculated using Fourier's Law,

$$Q_C = -kA\nabla T . \qquad (8)$$

In the temperature jump regime, **Kn** is between 0.01 and 0.1, and the heat transfer **$Q_{TJ}$** may be approximately calculated using an interpolation formula,

$$\frac{1}{Q_{TJ}} = \frac{1}{Q_{TR}} + \frac{1}{Q_C} , \qquad (9)$$

where $\boldsymbol{Q}_{TR}$ is the heat transfer in the transition regime.

In the transition regime, $\boldsymbol{Kn}$ is between 0.1 and 10, and the heat transfer may be calculated as (Springer 1971)

$$\frac{Q_{TR}}{Q_{FM}} = \left(1 + \frac{4}{15}\left(\frac{d}{\lambda}\right)\alpha_M\right)^{-1} , \qquad (10)$$

where $\alpha_M$ is the mean value of thermal accomodation coefficients.

In the free molecular regime $\boldsymbol{Kn}$ is greater than 10, and the heat transfer $Q_{FM}$ may be calculated using a relationship developed by Sparrow and Kinney (1964),

$$Q_{FM} = \left(\frac{1}{\alpha_1} + \frac{1}{\alpha_2} - 1\right)^{-1} 2\rho R\left(\frac{2\pi}{T^*}\right)^{-\frac{1}{2}}(T_{S1} - T_{S2}) , \qquad (11)$$

where $\alpha_1$ and $\alpha_2$ are accomodation coefficients, $\rho$ is the gas density, $T^*$ is the temperature of a homogenous Maxwellian gas, R is the molar ideal gas constant, and $T_{S1}$ and $T_{S2}$ are the surface temperatures. Another equation may include a number of empirically determined coefficients for the solid and vapor material combination that should be measured to accurately compute the gas heat transfer.

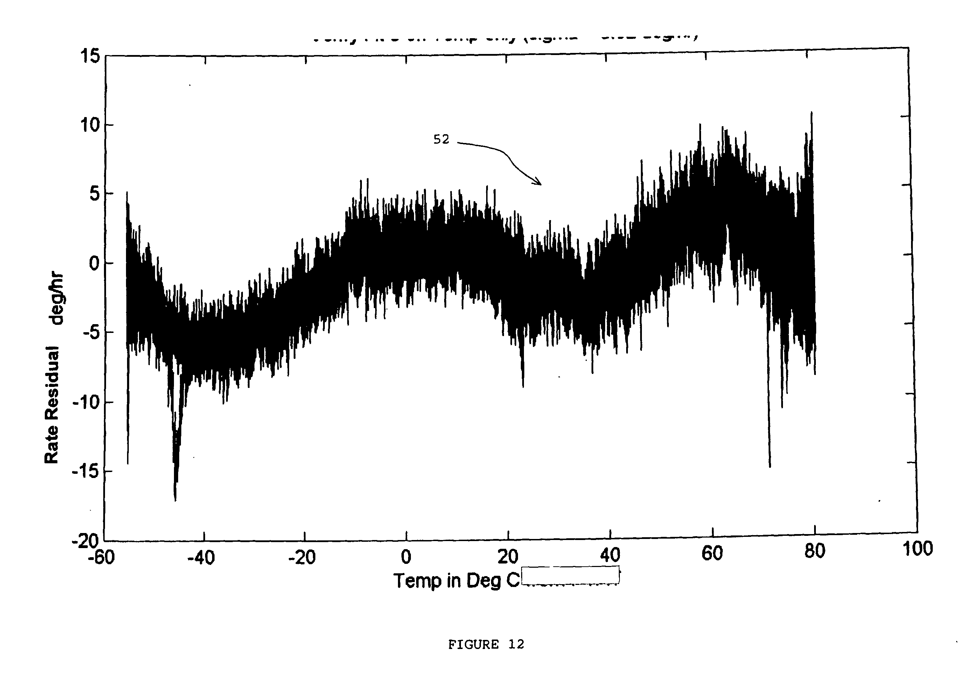

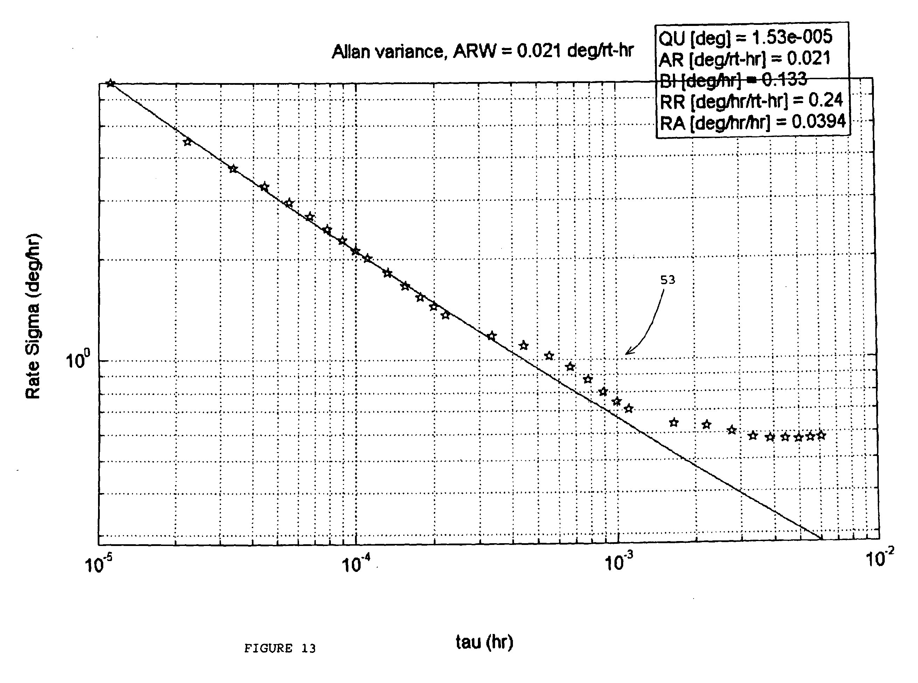

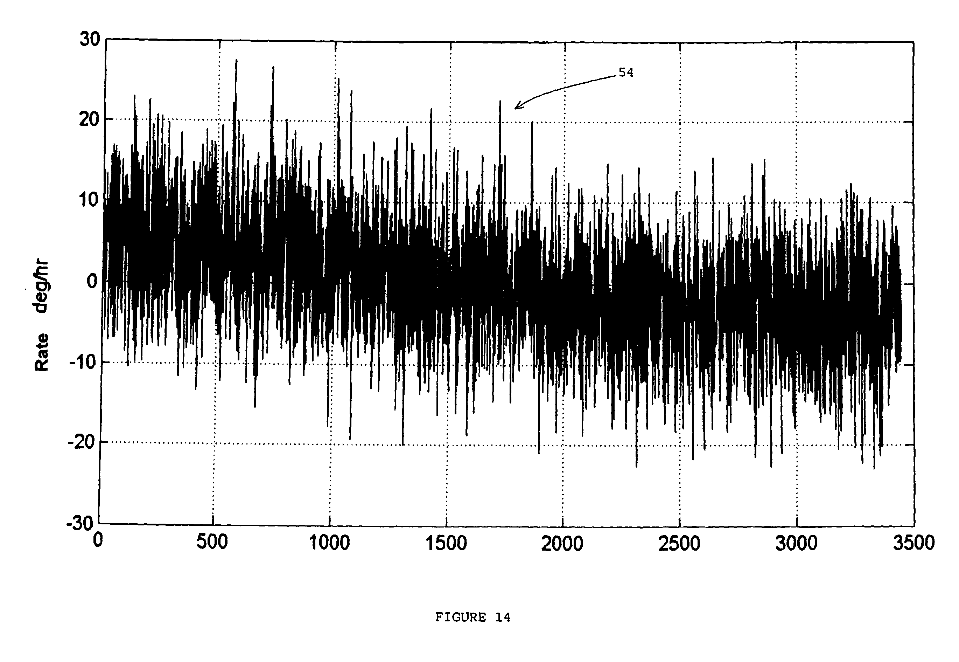

Use of the present vapor phase VTR system may improve the performance of an example MEMS gyroscope (gyro). The gyro may have bias stability over temperature of about 3 deg/hr (1 sigma) as indicated by curve 51 in Figure 11 which shows a graph of rate output (deg/hr) versus temperature (°C). The gyro may have a compensated bias stability over temperature of about 3 deg/hr (1 sigma), as may be supported by curve 52 in Figure 12 which shows a graph of compensated bias rate residual (deg/hr) versus temperature (°C). The gyro flicker noise floor of the Allan variance may be about 0.6 deg/hr, as may be indicated by data points and line 53 in Figure 13 which shows a graph of rate sigma (deg/hr) versus tau (hr). The angle random walk (ARW) of the gyro may be a 0.02 deg/rt/hr, as may be supported by curve 54 in Figure 14 which shows a graph of rate output (deg/hr) versus time. A performance improvement of the gyro due to temperature stabilization (with the present VTR system) may include bias stability equaling the flicker noise floor of the Allan variance, which is about 0.6 deg/hr (i.e., an improvement of five times).

In the present specification, some of the matter may be of a hypothetical or prophetic nature although stated in another manner or tense.

Although the invention has been described with respect to at least one illustrative example, many variations and modifications will become apparent to those skilled in the art upon reading the present specification. It is therefore the intention that the appended claims be interpreted as broadly as possible in view of the prior art to include all such variations and modifications.

**Claims**

1. A thermal resistor system (10) comprising:

an enclosure (11) having an internal surface (15); and
a device (12) situated in the enclosure (11), the device having an external surface (22) situated at a distance from the internal surface (15) of the enclosure (11); and
the device (12) is attached to the enclosure (11) with a thermal isolation
supporting structure (21) ; and

**characterised in that**:

one or both of the internal surface (15) of the enclosure (11) and the external surface (22) of the device (12) is coated with a vapor generating substance (16);
the enclosure (11) is hermetically sealed with a gas situated in a volume of space (17) between the device (12) and the enclosure (11), wherein the space is evacuated such that the gas in the space (17) is the vapor (18) of the vapor generating substance (16).

2. The system (10) of claim 1, wherein the generating substance (16) is selected from naphthalene, anthracine, and camphor.

3. The system (10) of claim 1, further comprising a heat sink (13) attached to an external portion of the enclosure (11).

4. The system (10) of claim 1, wherein the gas has a thermal conductivity that decreases with a reduction of temperature and increases with an increase of temperature.

5. The system (10) of claim 1, wherein the distance that the external surface (22) of the component (12) is situated from the internal surface (15) of the enclosure (11) is adjustable.

**Patentansprüche**

1. Thermistorsystem (10) umfassend:

ein Gehäuse (11) mit einer inneren Oberfläche (15); und
eine Vorrichtung (12), die sich in dem Gehäuse (11) befindet, wobei die Vorrichtung eine äußere Oberfläche (22) aufweist, die sich in einem Abstand von der inneren Oberfläche (15) des Gehäuses (11) befindet; und
wobei die Vorrichtung (12) an dem Gehäuse (11) mit einer wärmeisolierenden Tragkonstruktion (21) angebracht ist; und

**dadurch gekennzeichnet, dass**
die innere Oberfläche (15) des Gehäuses (11) und/oder die äußere Oberfläche (22) der Vorrichtung (12) mit einer Dampf erzeugenden Substanz (16) beschichtet sind;
das Gehäuse (11) hermetisch abgedichtet ist, wobei sich ein Gas in einem Raumvolumen (17) zwischen der Vorrichtung (12) und dem Gehäuse (11) befindet, wobei der Raum evakuiert ist, so dass das Gas in dem Raum (17) der Dampf (18) der Dampf erzeugenden Substanz (16) ist.

2. System (10) nach Anspruch 1, wobei die erzeugende Substanz (16) aus Naphthalin, Anthracen und Campher ausgewählt ist.

3. System (10) nach Anspruch 1, das ferner einen Kühlkörper (13) umfasst, der an einem äußeren Abschnitt des Gehäuses (11) angebracht ist.

4. System (10) nach Anspruch 1, wobei das Gas eine Wärmeleitfähigkeit besitzt, die sich bei einem Absinken der Temperatur verringert und bei einem Ansteigen der Temperatur vergrößert.

5. System (10) nach Anspruch 1, wobei der Abstand, in dem sich die äußere Oberfläche (22) der Komponente (12) von der inneren Oberfläche (15) des Gehäuses (11) befindet, einstellbar ist.

**Revendications**

1. Dispositif thermique (10) à résistance comprenant :

une enceinte (11) qui présente une surface interne (15) et
un dispositif (12) situé dans l'enceinte (11), le dispositif présentant une surface externe (22) située à distance de la surface interne (15) de l'enceinte (11) et le dispositif (12) étant fixé à l'enceinte (11) par une structure (21) de support qui permet une isolation thermique,

**caractérisé en ce que** :

la surface interne (15) de l'enceinte (11) et/ou la surface externe (22) du dispositif (12) sont recouvertes d'une substance (16) produisant de la vapeur,

l'enceinte (11) est scellée hermétiquement avec du gaz dans un volume de l'espace (17) situé entre le dispositif (12) et l'enceinte (11), l'espace étant évacué de telle sorte que le gaz situé dans l'espace (17) soit de la vapeur (18) de la substance (16) produisant de la vapeur.

2. Dispositif (10) selon la revendication 1, dans lequel la substance de production (16) est sélectionnée dans l'ensemble constitué du naphtalène, de l'anthracine et du camphre.

3. Dispositif (10) selon la revendication 1, comprenant de plus un diffuseur (13) de chaleur fixé à une partie externe de l'enceinte (11).

4. Dispositif (10) selon la revendication 1, dans lequel la conductivité thermique du gaz diminue lorsque la température diminue et augmente lorsque la température augmente.

5. Dispositif (10) selon la revendication 1, dans lequel la distance entre la surface externe (22) du composant (12) et la surface interne (15) de l'enceinte (11) est ajustable.

FIGURE 3

FIGURE 4

FIGURE 5

| Gyro Parameters | Value |
|---|---|
| Geometry | cubic |
| Volume (cc) | 1cc |
| Surface area (cm$^2$) | 6 |
| Heat dissipation (Watts) | 0.1 |
| Operating temperature (C) | 105 |
| Ambient temperature range | -40 to 85C |
| | |
| **VTR Parameters** | **Value** |
| Geometry | Cubic |
| Volume (cc) | 3.375 |
| Surface Area (cm$^2$) | 9 |
| Vapor material | Camphor |
| Vapor gap (cm) | 0.25 |
| Amount of vapor material (grams) | 1.00E-06 |
| Number Thermal isolation legs | 4 |
| Thermal isolation legs material | SiO$_2$ |
| Thermal isolation leg conductance (W/k): | 0.004 |

28

FIGURE 6

FIGURE 7

| VCSEL Parameters | Value |
|---|---|
| Geometry | Rectangular solid |
| Volume (cc) | 3.00E-05 |
| Surface area (cm$^2$) | 5.87E-07 |
| Heat dissipation (Watts) | 2.60E-03 |
| Operating temperature (C) | 70 |
| Ambient temperature range | 40 to 85C |
| | |
| VTR Parameters | Value |
| Geometry | Rectangular solid |
| Volume (cc) | 3.00E-05 |
| Surface Area (cm$^2$) | 3.5E-07 |
| Vapor material | Anthracine |
| Vapor gap (cm) | 0.01 |
| Amount of vapor material (grams) | 1.00E-07 |
| Number Thermal isolation legs | 4 |
| Thermal isolation legs material | SiO$_2$ |
| Thermal isolation leg conductance (W/k): | 0.0003 |

—38

FIGURE 8

FIGURE 9

EP 2 087 409 B1

FIGURE 10

FIGURE 11

EP 2 087 409 B1

FIGURE 12

EP 2 087 409 B1

FIGURE 13

FIGURE 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9005982 A